# FASCICULE DE BREVET EUROPEEN

(11) **EP 1 144 791 B1**
(45) Date de publication et mention de la délivrance du brevet: **16.07.2003**
(21) Numéro de dépôt: 99961084.3
(22) Date de dépôt: 14.12.1999
(51) Int. Cl.: E06B 3/66, B32B 17/10

(54) **MULTIPLE VITRAGE A ETIQUETAGE ELECTRONIQUE**
MEHRFACHVERGLASUNG MIT ELEKTRONISCHEM AUSZEICHNUNGSSYSTEM
MULTIPLE GLAZING WITH ELECTRONIC LABELLING

(30) Priorité: 14.12.1998 FR 9815842; 04.02.1999 FR 9901288
(43) Date de publication de la demande: 17.10.2001
(73) Titulaire: Catrame.FR S.A.R.L., 06500 Castellar (FR)
(72) Inventeur: DENEL, Daniel, F-06500 Castellar (FR); CARDOT, Patrick, F-06800 Cagnes sur mer (FR)
(74) Mandataire: Bonneau, Gérard
(86) Numéro de dépôt international: FR9903125
(87) Numéro de publication internationale: WO00036261

(56) Documents cités:
- EP-A- 0 252 066
- EP-A- 0 563 713
- DE-A- 3 338 125
- DE-A- 19 601 208
- DE-A- 19 607 294
- DE-C- 19 533 855

## Description

### Domaine technique

La présente invention concerne de façon générale les vitrages comportant plusieurs plaques de verre et disposant d'un étiquetage permettant leur suivi depuis leur élaboration jusqu'à leur utilisation finale, et en particulier un multiple vitrage disposant d'un étiquetage électronique. Un tel multiple vitrage est connu du document DE-A-3 338 125.

### Etat de la technique

Les multiples vitrages et en particulier les doubles vitrages sont de plus en plus utilisés dans le bâtiment puisqu'ils permettent d'obtenir une bonne isolation thermique, une excellente isolation acoustique, ainsi qu'une parfaite sécurité.

Les doubles vitrages disposent actuellement d'un marquage type CEKAL qui comporte un certain nombre d'informations telles que le procédé de fabrication utilisé, la date de fabrication et l'unité de fabrication, mais également d'un étiquetage sous forme d'une étiquette apposée sur le double vitrage dans l'unité de fabrication et comportant les indications des niveaux de performance en ce qui concerne l'isolation thermique, l'isolation acoustique, la protection et la sécurité.

Le marquage et l'étiquetage ont pour objectif de fournir des informations sur les caractéristiques du produit de manière à garantir la qualité du produit et à pouvoir le remplacer en cas de problème.

Malheureusement, la quantité d'informations marquées est forcément limitée dans la mesure où une trop grande quantité d'informations exige une surface de marquage et d'étiquette trop importante incompatible d'une part, avec la première fonction d'un vitrage qui est de laisser passer la lumière et d'autre part, avec l'esthétique.

En outre, les informations, forcément visibles, peuvent permettre à d'éventuels contrefacteurs de reproduire identiquement ces informations sur des vitrages de moindre qualité et de vendre ces vitrages comme s'il s'agissait de vitrages de qualité correspondant aux informations marquées.

### Exposé de l'invention

C'est pourquoi le but de l'invention est de fournir un multiple vitrage disposant d'un étiquetage électronique pouvant contenir un maximum d'informations non directement accessibles empêchant ainsi un éventuel contrefacteur de pouvoir les reproduire.

L'objet de l'invention est donc un multiple vitrage composé d'au moins deux plaques de verre séparées par une couche d'air ou d'un matériau transparent d'une épaisseur déterminée, comprenant une étiquette électronique d'une épaisseur inférieure ou égale à l'épaisseur de la couche séparant les plaques de verre. L'étiquette électronique dispose d'une mémoire contenant des informations numériques ayant trait d'une part aux caractéristiques du ou des verres utilisés et à sa fabrication, et d'autre part, à l'objet ou le produit (par exemple une fenêtre ou une automobile) dans lequel le vitrage est intégré, ces informations pouvant être lues à distance au moyen d'un lecteur prévu à cet effet.

### Description brève des dessins

Les buts et objets de l'invention ressortiront clairement à la lecture de la description suivante en référence aux dessins dans lesquels :
la figure 1 est une représentation schématique d'un double vitrage comportant une étiquette électronique et le lecteur associé conformément à un mode de réalisation de l'invention, et
la figure 2 est une représentation schématique d'une vitre en verre feuilleté comportant une étiquette électronique et le lecteur associé conformément à un autre mode de réalisation de l'invention.

### Description détaillée de l'invention

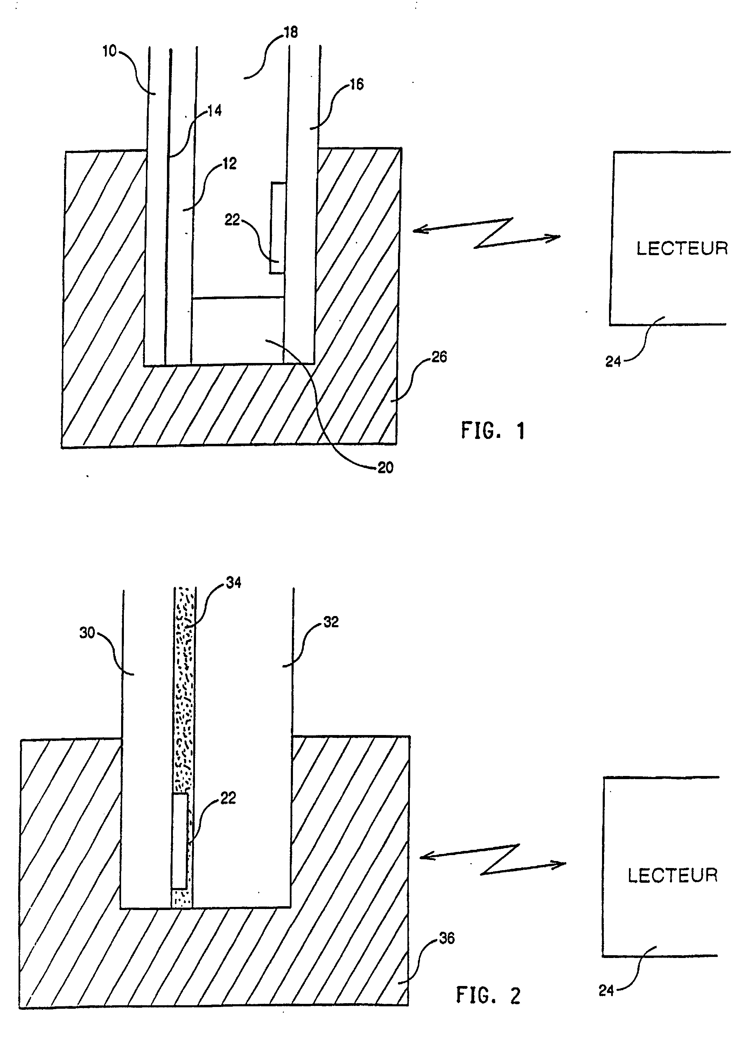

Comme illustré sur la figure 1, un double vitrage peut être formé d'une première vitre feuilletée destinée à former la surface extérieure du vitrage et composée de deux plaques de verre 10 et 12 assemblées à l'aide d'un film de butyral de polyvinyle (PVB) 14, et d'une deuxième vitre simple 16 destinée à former la surface intérieure du vitrage. Les deux vitres sont séparées par une lame d'air 18 et leurs bords sont réunis par un élément intercalaire 20 qui assure le scellement ainsi que l'étanchéité périphérique. Sur la surface intérieure de la vitre 16 est fixée une étiquette électronique 22 conforme à l'invention.

L'étiquette électronique 22 se présente sous la forme d'un module approximativement carré d'environ 14mm de côté (peut être plus ou moins grand) et de moins de 0,6 millimètre d'épaisseur, intégrant une puce électronique et une antenne. L'étiquette est activée par un signal radio de fréquence déterminée émis par un lecteur d'étiquette 24 se comportant comme un émetteur/récepteur qui lit et écrit (lorsque l'étiquette fonctionne également en écriture) des informations dans la puce à courte distance (20cm). Ainsi il existe dans le commerce des étiquettes de ce type disposant d'une mémoire ayant une capacité d'au moins 64 bits et sans limite supérieure étant donné la technologie évolutive et communiquant à l'aide d'une fréquence pouvant aller de 125KHz à plusieurs dizaines de MHz avec le lecteur.

Les informations enregistrées dans l'étiquette peuvent servir pour l'identification du dispositif ou des plaques de verre, par exemple la date de fabrication, le type de vitrage, la date de livraison, les données économiques de l'entreprise de fabrication, mais également les références du client et du produit ou objet intégrant ce vitrage.

L'étiquette 22 est fixée sur la vitre 16 par le transformateur de produits verriers primitifs et les données sont enregistrées dans la puce de l'étiquette. Elle peut être fixée par collage ou bien la puce est collée alors que l'antenne est marquée par sérigraphie sur le support. Dès lors, le produit verrier est marqué tout au long de son existence du transformateur au client final en passant par l'intégrateur et le distributeur, et on ne peut pas modifier son identité.

Comme illustré sur la figure, l'étiquette est placée près du bord de la vitre et donc à l'intérieur de la feuillure dans laquelle est logé le double vitrage. Par conséquent, l'étiquette placée à l'intérieur de la lame d'air est non seulement inaccessible et donc inviolable, mais également invisible, ce qui ne nuit plus à l'esthétique comme c'était le cas avec le marquage ou l'étiquetage classique.

Selon un premier mode de réalisation, les informations voulues sont enregistrées une fois pour toute dans la mémoire ROM de l'étiquette électronique 22 au moment de son incorporation dans le double vitrage pour pouvoir être lues par la suite par le lecteur 24. Mais il est plus judicieux d'utiliser une étiquette électronique comportant des parties de mémoire ROM affectées aux différentes étapes de la chaîne de transformation du produit verrier. Selon ce deuxième mode de réalisation, chaque acteur de la chaîne c' est à dire le transformateur, l'intégrateur et le distributeur a la possibilité d'enregistrer ses propres informations qui pourront être lues ensuite par le lecteur 24 sans possibilité d'être modifiées.

Selon un mode de réalisation particulier, la mémoire de l'étiquette électronique 22 comporte une partie qui n'est plus modifiable, du type mémoire ROM, dans laquelle sont enregistrées les informations qui ne doivent pas être modifiées, et une partie modifiable, du type RAM dans laquelle on enregistre les informations qui peuvent donner lieu à modification. Ainsi, les données de fabrication devenues inutiles peuvent être remplacées par simplement la référence usine et la date de fabrication. On pourrait également enregistrer des informations de mise à jour comme par exemple l'identification du dernier propriétaire d'un véhicule intégrant le double vitrage.

De façon à éviter tout enregistrement par une personne non autorisée à le faire ou la lecture non autorisée des informations contenues dans l'étiquette, il est conseillé de crypter les données enregistrées à l'aide d'une clé de cryptage connue seulement des personnes autorisées à enregistrer des informations dans l'étiquette ou à les lire.

Selon un troisième mode de réalisation, l'étiquette 22 peut être incorporée dans un vitrage en verre feuilleté comme illustré sur la figure 2. Les deux plaques de verre 30 et 32 sont assemblées au moyen d'une couche intercalaire 34 constituée de résine ou d'un ou plusieurs films de matière plastique telle que du butyral de polyvinyle (PVB) ou de l'acétate d'éthyl polyvinyle dont la propriété hydrophobe facilite la conservation, dans laquelle on a placé l'étiquette 22. Généralement, l'épaisseur d'un film de butyral de polyvinyle est approximativement de 0,38mm en deux épaisseurs ou de 0,76mm en une épaisseur. Par conséquent, si l'étiquette électronique a par exemple une épaisseur de 0,6mm, il faut prévoir deux épaisseurs de film PVB pour y loger l'étiquette. L'élaboration du vitrage est ensuite réalisée de façon classique, c'est à dire à chaud lorsque des éléments métalliques ou autres sont incorporés entre les deux plaques de verre. L'ensemble formé de la plaque de verre 30, de la couche intercalaire 34, de l'étiquette 22 et de la plaque de verre est assemblé à une température d'environ 130°C de sorte que la couche intercalaire fond et permet à l'étiquette 22 de prendre sa place dans l'épaisseur du film. On doit noter qu'il est préférable dans ce cas que l'étiquette soit fabriquée sur un support mieux adapté à son inclusion c'est à dire sur le film lui même de sorte qu'après fusion de la matière plastique, l'étiquett est totalement intégrée à l'intérieur du vitrage évitant ainsi tout risque de bullage qui, à terme, pourrait dégrader le vitrage.

De la même façon que précédemment, il est judicieux de placer l'étiquette électronique 22 près du bord du vitrage de manière à ce qu'elle soit dans l'épaisseur de la feuillure 36 et donc invisible.

Bien entendu, l'étiquette électronique peut être incorporée dans tout vitrage multiple formé de plus de deux plaques de verre. On doit noter que dans le double vitrage illustré sur la figure 1, l'étiquette aurait pu être incorporée dans le film 14 séparant les deux plaques de verre 10 et 12 du vitrage extérieur, ou encore fixée sur la surface intérieure de la plaque de verre 12.

En conclusion, la mise en oeuvre de multiples vitrages disposant d'une étiquette électronique contenant une grande quantité d'informations permet ainsi de suivre le produit à tous les stades depuis le transformateur jusqu'au client final, tout en permettant à chaque acteur de la chaîne d'enregistrer ses propres informations si l'étiquette permet aussi bien l'écriture que la lecture. Ainsi, la clientèle visée (le grand public) est garantie de disposer de produits de qualité, de conformité et de sécurité grâce aux informations enregistrées et qui peuvent être lues à tout moment au moyen d'un lecteur 24. En particulier, les organismes de certification ou normatifs, les assureurs, les intervenants en service après vente, peuvent contrôler à tout moment les caractéristiques du produit verrier disposant de l'étiquette électronique.

## Revendications

1. Multiple vitrage composé d'au moins deux plaques de verre (10, 12) séparées par une couche d'air ou d'un matériau transparent (18) d'une épaisseur déterminée, ledit vitrage comprenant un moyen d'étiquetage ayant trait aux caractéristiques du ou des verres utilisés et à sa/leur fabrication, ledit multiple vitrage étant **caractérisé en ce que** le moyen d'étiquetage est une étiquette électronique (22) d'une épaisseur inférieure ou égale à ladite épaisseur déterminée et apposée sur la paroi intérieure d'une desdites plaques de verre à un emplacement périphérique non visible de l'extérieur du multiple vitrage en position d'utilisation, ladite étiquette contenant en mémoire des informations numériques concernant lesdites caractéristiques et pouvant être lues à distance au moyen d'un lecteur prévu à cet effet.

2. Multiple vitrage selon la revendication 1, utilisé comme vitrage d'une fenêtre dans un bâtiment et dans lequel ladite étiquette électronique (22) est fixée près du bord de ladite plaque de verre (12) de manière à être rendue invisible lorsque le vitrage a été placé dans la feuillure (26 ou 36) destinée à le recevoir.

3. Multiple vitrage selon la revendication 1 ou 2, dans lequel ladite étiquette électronique (22) comprend une puce électronique et une antenne pour pouvoir transmettre par radio les informations contenues dans la mémoire de ladite puce à un lecteur (24).

4. Multiple vitrage selon la revendication 3, dans lequel ladite étiquette électronique (24) comporte un émetteur/récepteur de façon à permettre l'enregistrement d'informations à plusieurs stades de sa transformation jusqu'au client final.

5. Multiple vitrage selon la revendication 4, dans lequel au moins une partie des informations enregistrées dans ladite étiquette électronique (22) ne peuvent plus être modifiées.

6. Multiple vitrage selon la revendication 5, dans lequel les informations enregistrées dans ladite étiquette électronique (22) sont cryptées par une clé de cryptage connue des seules personnes autorisées.

7. Multiple vitrage selon l'une des revendications 1 à 6, étant du type double vitrage dans lequel les deux vitrages (10, 12 et 16) sont séparés par une couche d'air (18).

8. Multiple vitrage selon l'une des revendications 1 à 6, étant du type verre feuilleté, ladite étiquette électronique (22) étant incorporée à chaud dans l'épaisseur de la couche de matière plastique (34) telle que du butyral de polyvinyle séparant les deux plaques de verre (30, 32).

9. Multiple vitrage selon la revendication 8, dans lequel ladite matière plastique (34) est du butyral de polyvinyle (PVB) ou de l'acétate d'éthyl polyvinyle.

10. Multiple vitrage selon la revendication 8 ou 9, dans lequel ladite étiquette électronique (22) comporte un support constitué de ladite matière plastique de manière à ce que ladite étiquette électronique soit totalement intégrée après son incorporation à chaud.

## Patentansprüche

1. Mehrfachverglasung, bestehend aus mindestens zwei Glasplatten (10, 12), die durch eine Luftschicht oder eine Schicht aus einem transparenten Werkstoff (18) mit einer bestimmten Dicke voneinander getrennt sind, wobei die Verglasung ein Etikettiermittel aufweist, das die Merkmale des oder der verwendeten Gläser und seine/ihre Herstellung betrifft, wobei die Mehrfachverglasung **dadurch gekennzeichnet ist, daß** das Etikettiermittel ein elektronisches Etikett (22) ist, dessen Dicke kleiner oder gleich der bestimmten Dicke ist und das auf die Innenwand einer der Glasplatten an. einer Umfangsstelle aufgelegt ist, die von außen an der Mehrfachverglasung in Verwendungsstellung nicht sichtbar ist, wobei dieses Etikett digitale Informationen gespeichert hat, die diese Merkmale betreffen und mit Hilfe eines hierzu vorgesehenen Lesers ferngelesen werden können.

2. Mehrfachverglasung nach Anspruch 1 die als Verglasung eines Fensters in einem Gebäude verwendet wird und in der das elektronische Etikett (22) in Nähe des Rands der Glasplatte (12) so befestigt ist, daß es unsichtbar ist, wenn die Verglasung in den zu ihrer Aufnahme bestimmten Falz (26 oder 36) eingesetzt ist.

3. Mehrfachverglasung nach Anspruch 1 oder 2, bei der das elektronische Etikett (22) einen elektronischen Chip und eine Antenne umfaßt, um die im Speicher des Chips enthaltenen Informationen über Funk zu einem Leser (24) übertragen zu können.

4. Mehrfachverglasung nach Anspruch 3, bei der das elektronische Etikett (24) einen Sender/Empfänger aufweist, um die Aufzeichnung von Informationen in mehreren Phasen ihrer Umformung bis zum Endabnehmer zu gestatten.

5. Mehrfachverglasung nach Anspruch 4, bei der mindestens ein Teil der im elektronischen Etikett (22) aufgezeichneten Informationen nicht geändert werden kann.

6. Mehrfachverglasung nach Anspruch 6, bei dem die im elektronischen Etikett (22) aufgezeichneten Informationen durch einen nur den befugten Personen bekannten Schlüssel verschlüsselt sind.

7. Mehrfachverglasung nach einem der Ansprüche 1 bis 6, die vom Typ Doppelverglasung ist, bei der die beiden Gläser (10, 12 und 16) durch eine Luftschicht (18) getrennt sind.

8. Mehrfachverglasung nach einem der Ansprüche 1 bis 6, die vom Typ Verbundglas ist, wobei das elektronische Etikett unter Hitzeeinwirkung in die Dicke der die beiden Glasplatten (30, 32) voneinander trennenden Schicht (34) aus Kunststoff, wie z.B. Polyvinylbutyral, eingegliedert ist.

9. Mehrfachverglasung nach Anspruch 8., bei der der Kunststoff (34) Polyvinylbutyral (PBV) oder Polyvinylessigsäureethylester ist.

10. Mehrfachverglasung nach Anspruch 8 oder 9, bei der das elektronische Etikett (22) einen Träger aufweist, der aus diesem Kunststoff besteht, so daß das elektronische Etikett nach seiner Eingliederung unter Hitzeeinwirkung vollständig integriert ist.

## Claims

1. Multiple glazing consisting of at least two glass panels (10, 12) separated by a layer of air or a transparent material (18) of a given thickness, said glazing consisting of a labeling means indicating the characteristics of the glass used and its fabrication, said multiple glazing being **characterized in that** the labeling means is an electronic label (22) whose thickness is less than or equal to said given thickness and affixed to the inside surface of one of said glass panels at a peripheral location which is not visible from the outside of the multiple glazing in operating position, said label containing digital information in memory concerning said characteristics and which may be read remotely by means of a reader intended for this purpose.

2. The multiple glazing according to claim 1, used as window glazing in a building and in which said electronic label (22) is attached near the edge of said glass panel (12) in such a manner to be rendered invisible when the glazing is placed in the rabbet (26 or 36) intended for this purpose.

3. The multiple glazing according to claim 1 or 2, in which said electronic label (22) includes an electronic chip and an antenna in order to be able to transmit the information contained in the memory of said chip to a reader (24) by radiotransmission.

4. The multiple glazing according to claim 3, in which said electronic label (24) features a transceiver to allow information to be recorded at several stages of its transformation up to the final customer.

5. The multiple glazing according to claim 4, in which at least one part of the information recorded in said electronic label (22) cannot be modified.

6. The multiple glazing according to claim 5, in which the information recorded in said electronic label (22) is encrypted by an encryption key known only by authorized individuals.

7. The multiple glazing according to any of claims 1 though 6, being of double-glazing type in which both glass panels (10, 12, and 16) are separated by a layer of air (18).

8. The multiple glazing according to any one of claims 1 through 6, being of shatterproof glass type, said electronic label (22) being hot molded in the thickness of the layer of plastic material (34) such as polyvinyl butyral separating the two panels of glass (30, 32).

9. The multiple glazing according to claim 8, in which said plastic material (34) is polyvinyl butyral (PVB) or polyvinyl ethyl acetate.

10. Multiple glazing according to claim 8 or 9, in which said electronic label (22) features a support made of said plastic material such that said electronic label is totally integrated following its hot molding insertion.
